# EUROPEAN PATENT SPECIFICATION

(11) **EP 3 930 990 B1**
(45) Date of publication and mention of the grant of the patent: **19.04.2023**
(21) Application number: 20705748.0
(22) Date of filing: 25.02.2020
(51) Int. Cl.: B29C 70/44, B29C 33/00, B29C 33/30, B29B 11/16, B29L 31/08

(54) **A FLEXIBLE PREFORM MOULD FOR MANUFACTURING A PREFORM FOR A WIND TURBINE BLADE**
FLEXIBLE VORFORMFORM ZUR HERSTELLUNG EINER VORFORM FÜR EINE WINDTURBINENSCHAUFEL
MOULE FLEXIBLE DE FABRICATION DE PRÉFORMES POUR FABRIQUER UNE PRÉFORME DE PALE D'ÉOLIENNE

(30) Priority: 28.02.2019 EP 19160058
(43) Date of publication of application: 05.01.2022
(73) Proprietor: LM Wind Power A/S, 6000 Kolding (DK)
(72) Inventor: LEHMANN MADSEN, Kristian, 6000 Kolding (DK)
(74) Representative: COPA Copenhagen Patents
(86) International application number: PCT/EP2020/054882
(87) International publication number: WO 2020/173929

(56) References cited:
- FR-A1- 2 612 545
- NL-C2- 2 011 770

## Description

### Field of the invention

The present invention relates to a preform mould for manufacturing a preform for a wind turbine blade, to a method of manufacturing a preform for a wind turbine blade using the preform mould, and to a method of manufacturing a wind turbine blade part using one or more preforms.

### Background of the invention

Wind is an increasingly popular clean source of renewable energy with no air or water pollution. When the wind blows, wind turbine rotor blades spin clockwise, capturing energy through a main shaft connected to a gearbox and a generator for producing electricity. Rotor blades of modern wind turbines are carefully designed to maximise efficiency. Modern rotor blades may exceed 80 metres in length and 4 metres in width.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are often manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

In these blade manufacturing processes, the use of preforms becomes increasingly important. A preform is a shaped arrangement of fibres, such as multiple layers thereof, which has been bound and/or consolidated for later use as part of the fibre lay-up in the blade mould. The rationale for using preforms for blade manufacturing is to reduce cycle time in the blade mould. In addition, using preforms may reduce the number of required repairs due to the pre-consolidated structure of the preforms. As blade lengths increase, using preforms for blade lay-up adds efficiency and precision.

Typically, multiple preforms will be used in manufacturing a wind turbine blade. This usually requires large space for manufacturing and for storing the preforms. In addition, the manufacturing of preforms of different shapes and sizes can be time-consuming and expensive. Providing moulds for manufacturing preforms can be tedious and costly, which applies even more if preforms of various shapes and curvatures are required.

FR 2612545 A1 discloses reusable formwork modules for forming varied architectural shapes, the device comprising a metal panel serving as a support for small orientable hydraulic jacks. The thrusting arm of each jack ends with a small square plate, articulated on a ball joint. The small plates partially overlap and thus form a surface which contains the material to be cast. The shape of this surface can be varied according to the orientation of each jack, according to the length given by each jack to the thrusting arm and according to the inclination of each small plate.

US 2017/0210035 A1 relates to a mould for moulding a wind turbine blade or an elongate structural part thereof, the mould comprising a plurality of longitudinal elongate mould sections fitted together in an end-to-end relationship to form a unitary mould. Two moulds sections are arranged next to each other and a curable resin paste is disposed in a vertical gap between the flanges of the two abutting sections. Subsequently, the recess between the curved regions above the resin paste is filled with a first lamination of fibrous material and curable resin.

However, such prior art mould systems may be tedious to assemble and are found to be inflexible regarding the production of preforms of different shapes, sizes and/or curvatures.

It is therefore a first object of the present invention to provide a cost-efficient way of manufacturing preforms for wind turbine blade parts.

It is a further object of the present invention to provide a flexible and efficient mode of manufacturing such preforms.

It is another object of the present invention to provide an improved method of assembling a mould for producing such preforms.

### Summary of the invention

The present invention addresses one or more of the above-discussed objects by providing a preform mould for manufacturing a preform for a wind turbine blade, the preform mould comprising one or more support elements and a plurality of strip members arranged on the one or more support elements, wherein at least one of the strip members comprises a top surface extending between a first lateral edge and an opposing second lateral edge, a groove extending along the first lateral edge, and a tongue extending along the second lateral edge, wherein the strip members are arranged in juxtaposition, and wherein the tongue of a strip member is releasably fixed within the groove of an adjacent strip member, the respective top surfaces of the strip members forming a moulding surface for moulding the preform. In a preferred embodiment, the strip member further comprises a sealing member arranged in the groove.

A particularly preferred embodiment provides a preform mould for manufacturing a preform for a wind turbine blade, the preform mould comprising one or more support elements and a plurality of strip members arranged on the one or more support elements, wherein at least one of the strip members comprises:
a top surface extending between a first lateral edge and an opposing second lateral edge,
a groove extending along the first lateral edge,
a tongue extending along the second lateral edge, and
a sealing member arranged in the groove,
wherein the strip members are arranged in juxtaposition, and wherein the tongue of a strip member is fixed, preferably releasably fixed, within the groove of an adjacent strip member, preferably such that the tongue abuts the sealing member, the respective top surfaces of the strip members forming a moulding surface for moulding the preform.

The arrangement of the present invention provides a flexible preform mould that can be easily assembled and varied. Also, the resulting moulding surface for moulding the preform can be provided as a substantially gas-tight moulding surface due to the tongue and groove arrangement, preferably including the sealing member. This is advantageous if the preforms are consolidated by the application of vacuum during the preform manufacturing process.

Preferably, the preform to be manufactured by the present method is a consolidated arrangement of material comprising fibres, such as glass fibres, and a binding agent. The preform will typically be used for manufacturing a blade half of a wind turbine blade. The preforms can be used in a subsequent blade moulding process as part of the fibre lay-up in the blade mould, such as a blade half mould. The preforms manufactured according to the present invention can be placed within the root region of a blade mould, thus constituting part of the root laminate. The root region may correspond to a region of the blade having a substantially circular or elliptical cross-section. However, the preforms could also be used for other parts and regions of a wind turbine blade, such as trailing edge or leading edge reinforcements or adhesive flanges. Alternatively, the preforms could be used for a full blade layup, or the central load carrying laminates as the main laminate.

The support element(s) may comprise a planar member which preferably extends vertically from the ground surface so that its front surface extends in a plane substantially perpendicular to the floor or workspace surface. It is preferred that the support elements are extending substantially vertically. The planar member of the support element is substantially planar so that it extends in a vertical plane. It may advantageously have the shape of a plate, preferably a rectangular plate comprising a cutaway along at least part of its upper edge. The cutaway may be generally arcuate, U-shaped or semi-circular. Thus, the top surface of the support element preferably comprises a curved, arcuate, undulated or generally U-shaped segment.

The front surface and the opposing back surface of the planar member of the support element will usually be in substantially parallel planes and will typically constitute the surfaces of the planar member with the largest surface area. By contrast, the top surface and the opposing bottom surface will usually be comparatively narrow, thus having less surface area, in particular when the planar member is made from a thin sheet, for example a steel sheet with a thickness of between 1 and 50 mm. The two opposing lateral surfaces, or side surfaces, of the planar member will usually be just as narrow/wide as the top and bottom surfaces.

In some embodiments, the support element can comprise a foot support, for example a foot flange, to facilitate stable arrangement on the ground surface. The support element may also be fixed to the ground surface. For instance, the bottom surface of the planar member may be received in a groove or a recess provided in the ground surface or in a ground plate.

The preform mould of the present invention may comprise at least three, such as at least four or at least five, support elements. In one embodiment, the support elements are interconnected by one, two or more lateral rails, which are preferably fixed to the lateral surfaces of the planar members of each support element.

The strip members used for the preform mould of the present invention will usually be composite strip members and/or comprise one or more polymer materials. The strip members may be produced by extrusion and/or pultrusion. The top surface of the strip member is preferably a rectangular top surface with length L and a width W. The length L of the top surface may be between 15 and 50 m, such as between 20 and 30 m. The width W of the top surface may be between 50 and 200 mm, preferably between 80 and 150 mm.

The first and second lateral edges delimiting the top surface of the strip member will typically extend along, or substantially parallel, to the longitudinal axis/direction of the strip member, i.e. along its length extent. The top surface will usually be further delimited by transverse edges, i.e. a front edge and a rear edge extending substantially transversely to the lateral edges. The strip members are advantageously arranged in juxtaposition such that the first lateral edge of a top surface of one strip member is adjacent and substantially parallel to the second lateral edge of a top surface of an adjacent strip member.

The total width Wt of the strip members may be slightly higher than the width W of the top surface, for example due to an upwardly projecting arm provided next to the lateral edge of the top surface. Typically, the total width Wt of the strip members will be defined by the outermost, i.e. most lateral, points of the tongue and the upwardly projecting arm, respectively. The total width Wt of the strip member may be between 50 and 200 mm, preferably, between 80 and 150 mm, most preferably between 100 and 120 mm.

The strip members are arranged in juxtaposition, i.e. in a side-by-side fashion. The strip members will typically be arranged in an edge-to-edge fashion, i.e. lateral edge to lateral edge fashion. It has been found by the present inventors that using multiple adjacent strip members for forming a moulding surface of a preform mould allows for an easy and cost-efficient manufacturing of preform moulds even with complex geometries.

It is preferred that the preform mould comprises at least three strip members, such as at least four, at least five, at least six, at least seven, or at least eight strip members. In some embodiments, the preform mould comprises at least 25 strip members, such as at least 30 strip members. In a preferred embodiment, the preform mould comprises not more than 15 strip members. In another embodiment, the preform mould comprises not more than 10 strip members. Advantageously, the preform mould comprises 3-15 strip members.

In some embodiments, the preform mould has a length of between 15 and 30 meters. In other embodiments, the preform mould has a width of 2-5 meters. In some embodiments, the preform mould has a height of between 0.5 and 2 meters. The moulding surface of the preform mould may have a moulding surface area of between 10 and 100 square meters, such as between 30 and 80 square meters, preferably between 50 and 70 square meters.

In some embodiments, the preform mould may comprise up to 60, 70, 80, 90 or 100 strip members. In one embodiment, the strip members are arranged substantially in parallel to each other. In another embodiment, the strip members are arranged substantially perpendicularly to the plane of orientation of the planar members of the support elements.

In one embodiment, the strip members extend in a longitudinal direction of the preform mould, such that their longitudinal direction or length extent is aligned with the longitudinal direction of the preform mould. In other embodiments, the strip members extend in a transvers direction of the preform mould, such that their longitudinal direction or length extent is normal to the longitudinal direction of the preform mould.

In a preferred embodiment each of the strip members comprises a top surface extending between a first lateral edge and an opposing second lateral edge, a groove extending along the first lateral edge, a tongue extending along the second lateral edge, and optionally a sealing member arranged in the groove. The strip member forming an outer edge of the moulding surface with its lateral edge does not necessarily need to have a sealing member arranged in its groove if no tongue is arranged in the same.

The tongue of one strip member may be fixed within the groove of an adjacent strip member with a friction-type connection and/or in a positive mechanical engagement, or combinations thereof. It is particularly preferred, that the tongue is fixed within the groove such that the tongue may rotate at least 1 degree about its longitudinal axis, preferably at least 5 degrees. This enables obtaining different configurations of the moulding surface, including a curved moulding surface. Typically, the groove will extend substantially parallel to the lateral edges of the strip member along the entire length of the strip member.

It is preferred that the tongue abuts the sealing member, however, in some embodiments the tongue is not in direct contact with the sealing member. The top surfaces of the strip members together form the moulding surface, or a part thereof, for moulding the preform. As used herein, the top and bottom surfaces of the strip member refer to the sides of the strip member having the largest surface area, wherein the top surface faces upward towards the preform, and the bottom surface faces downwards towards the floor and/or the support element(s). The term upward refers to a direction substantially normal to the top surface of the strip element. The term downward refers to a direction substantially normal to the bottom surface of the strip element, usually pointing towards the floor. The vertical distance between the top surface and the bottom surface may be 1-20 mm, such as 1-10 mm.

It is particularly preferred that the tongue, in particular the distal end thereof, has an at least partially circular cross section. In some embodiments, the tongue, in particular the distal end thereof, is at least partly spherical. This allows for some rotational movement of the tongue within the groove for being able to adapt the relative rotational positions of two or more adjacent strip members. Thus, a curved moulding surface can be efficiently obtained, for example a convex or a concave surface.

According to another embodiment, the groove is upwardly open, and the tongue is projecting downwardly. Thus, the tongue can be arranged in the upwardly open groove by inserting it from the top and lowering it into the groove, preferably in a locking arrangement. This also has the benefit of securing the strip members to each other and preventing lateral movement which might result in undesired gaps between adjacent strip members.

Advantageously, the groove may comprise opposing inner side walls, wherein a recess is provided in each of the opposing inner side walls for receiving the tongue in a locking arrangement. The opposing inner side walls of the groove will usually extend substantially parallel to the lateral edges of the top surface of the strip member, advantageously along the entire length L of the strip member. The recess is preferably a curved or arched recess for receiving a curved or arched mating surface of the tongue in a locking arrangement. The recess may extend substantially parallel to the lateral edges of the top surface of the strip member, advantageously along the entire length L of the strip member. Advantageously, the recess allows for at least partial rotation of the tongue within the recess in the locking arrangement. In other words, the locking arrangement advantageously prevents a linear (upward) movement of the tongue within the groove but enables at least partial rotation of the tongue within the recess of the groove.

In a preferred embodiment, the groove comprises opposing shoulders for retaining the sealing member. Advantageously, the shoulders are formed between an upper groove portion with a first groove width and a lower groove portion with a second groove width, wherein the second groove width is lower than the first groove width. The first groove width may be between 3 and 7 mm, the second groove width may be between 1 and 4 mm.

According to another embodiment, the sealing member is a gasket, preferably comprising a silicone material. In a preferred embodiment, the sealing member is a hollow gasket, such as a hollow silicone gasket. The sealing member is preferably elastically deformable. In other embodiments, the sealing member may comprise a gasket filled with a flexible foam material. Thus, it can be ensured that air cannot travel in the hollow part of the gasket, but the gasket still remains flexible.

In a preferred embodiment, the moulding surface is substantially gas-tight. This may be achieved by using the sealing members of the present invention. Thus, the moulding surface may be used for applying vacuum or negative pressure to the preform for consolidating the same. Prior art preform moulds suffer from the disadvantage that such application of negative pressure is ineffective as the preform moulding surface is too gas permeable.

In some embodiments, the strip member comprises a first downward projecting leg near the first lateral edge and a second downward projecting leg near the second lateral edge. Thus, the first and second downward projecting legs may be located within the respective outer 15% of the strip member width, i.e. spaced from their respective lateral edge by not more than 15% of the total width of the strip member. The legs may add structural stability to the preform mould and can be used to limit rotational movement of the strip members within the desired limits. Each leg may have a length (vertical extent) of 30-80 mm, such as 30-50 mm, as measured from the top surface of the strip member.

According to another embodiment, the groove is formed between a downward projecting first leg and an upward projecting arm of the strip member. As measured from the top surface, the groove preferably has a depth of 10-30 mm, preferably 15-25 mm. In some embodiments, the groove preferably has a depth of at least 15 mm. It is preferred that the upward projecting arm branches off from the downward projecting arm of the strip member. The upward projecting arm may have a length (vertical extent) of 10-50 mm.

In a preferred embodiment, the upward projecting arm is elastically displaceable to receive the tongue of an adjacent strip member in the groove in a locking arrangement. Thus, the arm can be moved slightly sideward to facilitate inserting the tongue into the groove. After the tongue is inserted, the arm can be released to exert pressure on the tongue for keeping it in a locking arrangement. This may be achieved by manufacturing the arm from a flexible, elastic material, such as a fibre composite material.

According to another embodiment, the strip members comprise glass fibres. It is preferred that the strip member is made of a fibre composite material, such as a glass fibre composition material.

In a preferred embodiment, a cavity between the lateral edges of adjacent strip members is filled with a filler, such as a silicone filler, at least along part of the respective lateral edges. The moulding surface will usually extend between a left edge, a right edge, a rear edge and a front edge. The lateral edges of the respective top surfaces of the strip members will extend substantially with the rear and front edge of the mould surface. In other words, the strip members will typically be arranged such that their longitudinal axis or length extension is substantially normal to the left and right edges of the moulding surface. Thus, one or more cavities between the lateral edges of the top surfaces of adjacent strip members can be filled with a filler, such as a silicone filler, along part of the respective lateral edges of the top surfaces, within a distance of 1 meter or less from each of the left and right edges of the moulding surface as measured in the longitudinal direction or length extension of the strip members. In some embodiments, the filler is an epoxy glue. In a preferred embodiment, one or more cavities between the lateral edges of the top surfaces of adjacent strip members can be filled with a filler, along part of the respective lateral edges of the top surfaces, within a distance of 50 mm or less, such as 10-50 mm, or such as 30 mm or less, from each of the left and right edges of the moulding surface as measured in the longitudinal direction or length extension of the strip members.

In a preferred embodiment, the support elements may comprise one or more tabs extending substantially perpendicularly from the top surface of the planar member for supporting the strip members. The tabs effectively increase the surface area of the top surface, wherein the tabs can be viewed as being part of said top surface. The tabs could be formed in the plane of planar member by cutting a plate, for example a steel plate, in the shape of the planar member and the tab. The tabs may subsequently be folded into the position substantially perpendicular to the plane of orientation of the planar member, for example assisted by scoring or notching operations along a fold line. In some embodiments, the support element comprises at least two, such as at least three, four or five tabs extending substantially perpendicularly from the top surface of the planar member for supporting the strip members.

According to another embodiment, the top surface of the planar member of the support element is curved. In another embodiment, the top surface of the support element is curved, arcuate, undulated or generally U-shaped, when seen from a front view of the support element. In one embodiment, the two corners of the upper edge of the planar member are connected by an at least partly curved, arcuate, undulated or generally U-shaped path.

In a preferred embodiment, the curvature of the top surface of the planar member of the support element corresponds to a cross sectional profile of a wind turbine blade half or a part thereof. According to another embodiment, the curvature of the top surface of the planar member of one support element is different from the curvature of the top surface of the planar member of another support element. This has the advantage that the shape of the cross-sectional profile of the preform may vary in its length direction. Thus, even complex preform mould geometries can be easily obtained using the method and preform mould of the present invention. The present invention makes it possible to make a complex double curved and vacuum tight surface/mould without use of standard methods of either making a plug, and then making a mould on top of this plug, or by milling the mould in one large piece. This type of mould surface can be mounted by use of only a saw and a rubber hammer. This makes the present invention a very cost-effective way of manufacturing a preform mould.

The support elements may generally be manufactured starting from a rectangular sheet and by cutting a curved path away along at least part of its upper edge. In some embodiments, the cutting path may provide for one or more foldable tabs extending from the upper edge.

In a preferred embodiment, the plurality of support elements is arranged substantially in parallel to each other. In particular the respective front surfaces of the planar members may be arranged substantially parallel to each other. According to another embodiment, the strip members are attached to the support elements by one or more blind fasteners or spot weldings. In a preferred embodiment, the planar member of the support element has a thickness of less than 3 cm, such as less than 2 cm or less than 1 cm.

It is preferred that the moulding surface of the preform mould is substantially flat. In a preferred embodiment, the difference in height of the moulding surface between its lowest point and its highest point is less than 3 meters, 2 meters, more preferably less than 1 meters, most preferably less than 0.5 meters. In other embodiments, the difference in height of the moulding surface between its lowest point and its highest point is less than 50% of the root diameter, more preferably less than 25% of the root diameter, most preferably less than 10% of the root diameter of the wind turbine blade to be manufactured.

When manufacturing large blades, the fibre layup in the blade mould at the root end may be challenging. Fibre material may slide down the almost vertical blade mould walls due to the almost semi-circular cross section or circumference at the root end. The sliding of fibre material during manufacturing may lead to the formation of undesired wrinkles in the shell structure, which may present zones of structural weakness within the blade and consequently expensive repairs. Thus, the relatively flat moulding surface of the preform moulds of the present invention provides for the option of forming relatively flat preforms that together cover the entire circumference of the blade half, as seen in its cross section, for an improved and safer layup process at the blade mould. In some embodiments, the preforms obtainable by the present invention can be used in a one-shot blade manufacturing process without bond lines.

In one embodiment, the preform mould has a length L of between 15 and 30 meters. Thus, the length of each strip member may be between 15 and 30 meters. The strip members are preferably flexible. In preferred embodiments, the strip members are relatively thin with a maximum thickness of between 1 and 10 mm. It is preferred that the strip members are bendable. Thus, the strip members can advantageously be fitted to produce preform geometries varying in curvature in the longitudinal direction of the preform.

In some embodiments, each preform mould has a length-width ratio of at least 5:1. In other embodiments, each preform mould has a length-width ratio of at least 5:1, such as at least 10:1. In a preferred embodiment, each preform mould has a length-width ratio of at least 15:1. In some embodiments, each preform mould has a length-width ratio of up to 100:1.

In a preferred embodiment, each of the preforms obtainable by the preform mould of the present invention is configured to form a blade section starting from the root end of the wind turbine blade. Thus, preferably each of the preforms obtainable by the preform mould of the present invention is configured to be arranged at the root end of the blade mould. Most preferably, the preform obtainable using the preform mould of the present invention is configured to form a subsection of the root section extending from the root end of the blade together with other subsections of the root section equally extending from the root end of the blade.

In some embodiments, the preform moulds of the present invention comprise a moulding surface configured for the manufacturing of respective subsections of a wind turbine blade, each subsection extending from the root end of the wind turbine blade. In some embodiments, the preform mould has a concave, or inwardly curved, moulding surface.

In another aspect, the present invention relates to a method of manufacturing a preform for a wind turbine blade using the preform mould of the present invention, the method comprising the steps of
laying a fibre material, and optionally a binding agent, on at least part of the moulding surface, and
applying negative pressure to the fibre material and optionally binding agent for consolidating the preform.

The fibre laying step will typically comprise the use of one or more fibre lay-up devices. In a preferred embodiment, the method further comprises a step of heating the fibre material and the binding agent to form a preform. Preferably, the fibre material and the binding agent are heated using one or more heating devices, such as an oven. Preferably, a binding agent is added to the fibres prior to the heating step. Such binding agent is preferably present in an amount of 0.1-15 wt% relative to the weight of the fibre material. The binding agent may also be present in an amount of 10-20 gram per square meter of glass surface. In other embodiments, the binding agent may be present in an amount of 1-100 gram per square meter of glass surface.

Typically, the fibre material is placed successively onto the moulding surface provided by the strip members. The fibre material may comprise glass fibres, carbon fibres or a combination thereof. According to a preferred embodiment of the method, a glass fibre material is placed onto the strip members, such as multiple layers of glass fibre material. The fibre material may advantageously be brought into contact with a binding agent before or during the fibre lay-up.

In another embodiment, the fibre material may include fibre rovings, such as glass fibre rovings. The lay-up process may include placing multiple single roving bundles into the mould, the roving bundles being preferably aligned unidirectionally. In a preferred embodiment, multiple layers of fibre rovings or roving bundles are successively placed onto each preform mould.

The binding agent can be added simultaneously with the fibres or subsequently to fibre lay-up. The binding agent is preferably present in an amount of 0.1-15 wt% relative to the weight of the fibre material. The binding agent may also be present in an amount of 5-40, preferably 10-20, gram per square meter of glass surface. In preferred embodiments, the binding agent is present in an amount of 0.5-5 wt%, preferably 0.5-2.5 wt%, relative to the weight of the fibre material. Advantageously, the binding agent is a thermoplastic binding agent. The binding agent may comprise a polyester, preferably a bisphenolic polyester.

In a preferred embodiment, the heating of the fibre material and the binding agent takes place at a temperature of between 40 and 160 °C, preferably between 90 and 160 °C.

An example of a suitable binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Another example is a polyester resin marketed under the name C.O.I.M. FILCO^{®} 661 FPG 005, which is a bisphenolic unsaturated polyester resin in powder form. Preferably, the binding agent is a polyester, preferably a bisphenolic polyester. In other embodiments, the binding agent is a hotmelt adhesive or based on a prepreg resin. In some embodiments, the preform comprises an epoxy material.

According to another embodiment, the binding agent is a thermoplastic binding agent. Typically, the fibre rovings are at least partially joined together by means of the binding agent by thermal bonding. In a preferred embodiment, the binding agent is a binding powder, such as a thermoplastic binding powder.

In one embodiment, the preforms of the present invention essentially consist of the fibre material and the binding agent. This means that the preforms contain no more than 10 wt%, preferably not more than 5 wt% or not more than 1 wt%, of material other than fibre material and binding agent relative to the total weight of the preform. According to another embodiment, the preform consists of the fibre material and the binding agent.

In another embodiment, the fibre material used for the preforms of the present invention essentially consists of glass fibres. This means that the fibre material contains not more than 10 wt%, preferably not more than 5 wt% or not more than 1 wt%, of material other than glass fibres relative to the total weight of the fibre material. According to another embodiment, the fibre material consists of glass fibres.

In one embodiment, the binding agent is present in an amount of 1-6 wt% relative to the weight of the fibre material. According to another embodiment, the melting point of the binding agent is between 40° and 220 °C, preferably between 40 and 160 °C. According to another embodiment, the binding agent comprises a polyester, preferably a bisphenolic polyester.

In one embodiment of the present invention, each preform essentially consists of the fibre material and the binding agent. According to another embodiment, the fibre material comprises fibre rovings, preferably glass fibre rovings. In other embodiments, the fibre material may comprise carbon fibres or a hybrid material. According to another embodiment, the fibre material comprises a fibre fabric, such as a fibre mat. In another embodiment, a preform may further comprise at least one fibre fabric such as a fibre mat. Fibre rovings may be arranged on top and/or below such fabric.

In a preferred embodiment, the preforms manufactured according to the afore-mentioned method are used as part of the root region of a wind turbine blade, such as the root laminate. The root region may extend up to 40 meters, such as up to 25 meters, from the root end of the blade, as seen in its longitudinal direction. In other embodiments, the root region may extend to the shoulder of the blade +/- 5 meters. However, the preforms could also be used for other parts and regions of a wind turbine blade. In other embodiments, the preforms manufactured according to the afore-mentioned method are used over a length of 10-35% of the total blade length. In another embodiment, the preforms manufactured according to the afore-mentioned method are used in a region of the blade extending between its root end and a shoulder of the blade.

It is preferred that the method further comprises the step of heating the fibre material and the binding agent to a temperature of between 40 and 200 °C to form the preform.

In another aspect, the present invention relates to a method of manufacturing a wind turbine blade part, the method comprising:
- manufacturing one or more preforms according to the method of the present invention,
- arranging the preforms in a blade mould cavity, optionally together with additional material,
- infusing resin to the blade mould cavity,
- curing or hardening the resin in order to form the blade part.

In some embodiments, the method of manufacturing a wind turbine blade part may involve arranging preforms in a prefab mould with subsequent infusing of resin and curing for manufacturing sub parts for later blade assembly. In some embodiments, the wind turbine blade part is a root laminate, a main laminate or a part thereof. In another embodiment, the blade part is a blade half.

Typically, the resin infusion step comprises vacuum assisted resin transfer moulding. In a preferred embodiment, the resin dissolves the binding agent of the preform. Other embodiments involve chemical binding, for example for epoxy or thermoset resins.

The resin for injecting the preform during the manufacturing of wind turbine blade parts, such as a root laminate, may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.

It will be understood that any of the above-described features may be combined in any embodiment of the method of manufacturing a preform or of the preform mould. In particular, features and embodiments described with regard to the preform mould may also apply to the method of manufacturing a preform, and vice versa.

In another aspect, the present invention relates to a plurality of preforms obtainable by the afore-described method. The present invention also relates to a blade part obtainable by the method of manufacturing a wind turbine blade part.

As used herein, the term "planar member" indicates member with an extension primarily in two dimensions, i.e. a member with major extensions in the width and length dimension and a significantly smaller extension in the depth extension. Examples include planar members with width and length extensions at least 10 times higher than the depth extension.

As used herein, the term "wt%" means weight percent. The term "relative to the weight of the fibre material" means a percentage that is calculated by dividing the weight of an agent, such as a binding agent, by the weight of the fibre material. As an example, a value of 1 wt% relative to the weight of the fibre material corresponds to 10 g of binding agent per kilogram of fibre material.

As used herein, the term "longitudinal" means an axis or direction running substantially parallel to the maximum linear dimension of the element in question, for example a strip member or a preform mould.

### Detailed description of the Invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a perspective drawing of a preform mould according to the present invention,
Fig. 6 is a side view of a strip member according to the present invention,
Fig. 7 is a side view of plurality of strip members in a first arrangement,
Fig. 8 is a side view of plurality of strip members in a second arrangement,
Fig. 9 is a side view of plurality of strip members in a third arrangement,
Fig. 10 is an enlarged side view of part of the strip member of Fig. 6,
Fig. 11 is a perspective drawing of an arrangement of support elements for a preform mould according to the present invention,
Fig. 12 is a perspective drawing of a blade mould for lay up of preforms according to the present invention,
Fig. 13 is a perspective drawing of another embodiment of a preform mould according to the present invention, illustrated without the strip members, and
Fig. 14 is a perspective drawing of the preform mould of Fig. 13 illustrated with the strip members.

### Detailed Description

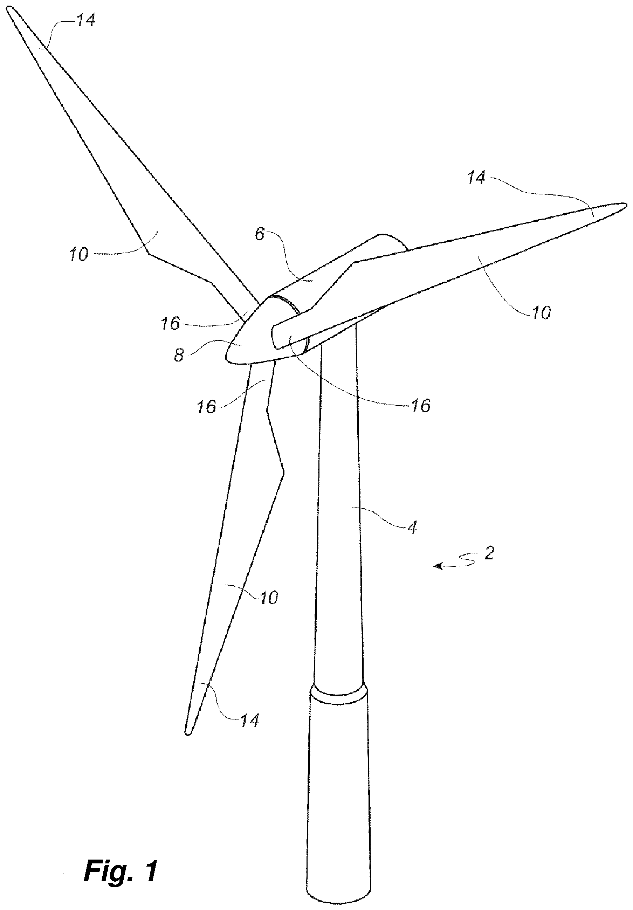

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

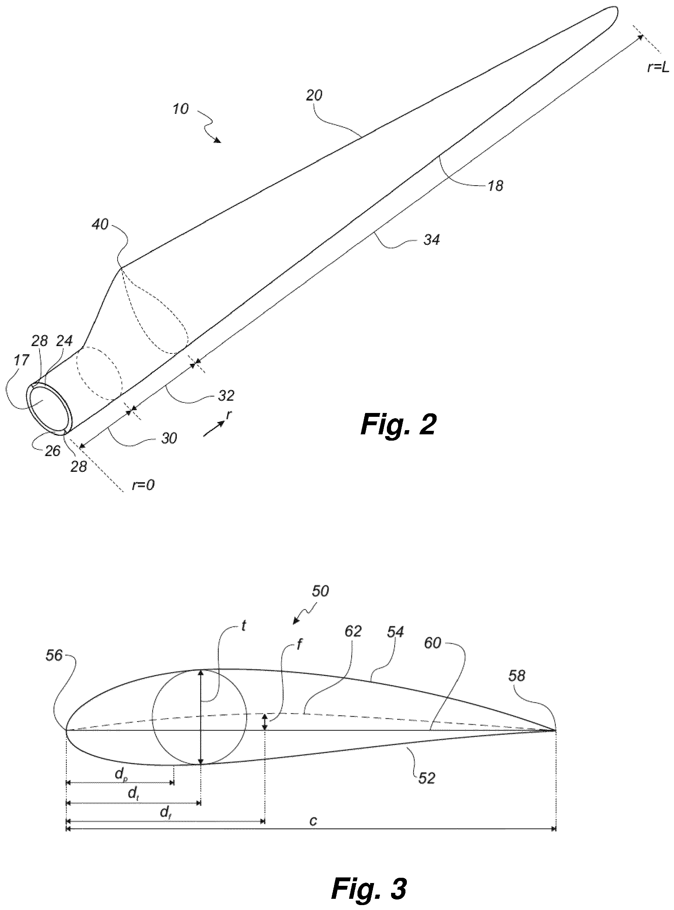

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r*from the hub. The airfoil region 34 has an airfoil profile with a chord extending between the leading edge 18 and the trailing edge 20 of the blade 10. The width of the chord decreases with increasing distance *r*from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

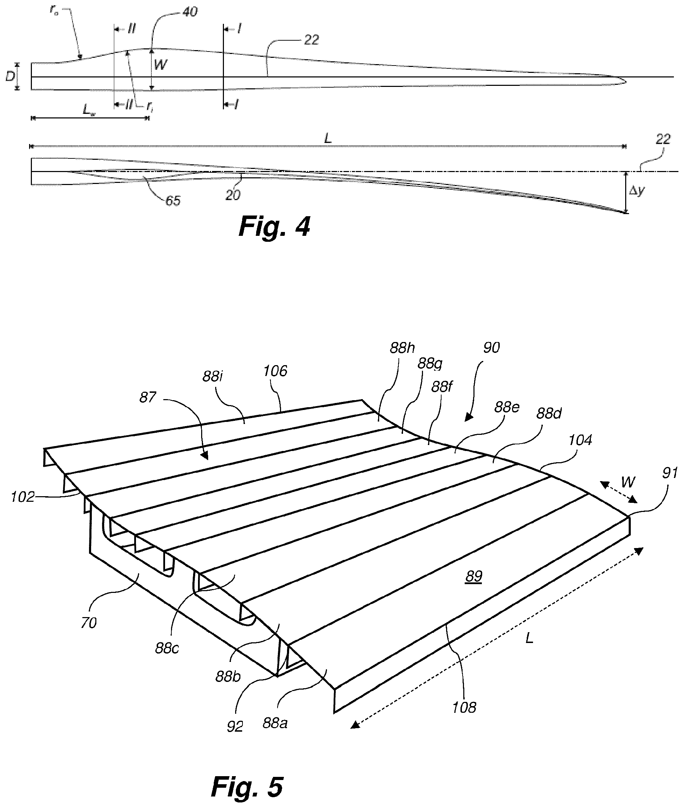

Figs. 3 and 4 depict parameters which are used to explain the geometry of the wind turbine blade according to the invention. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f,* the position *d_{f}* of the maximum camber *f,* the maximum airfoil thickness *t*, which is the largest diameter of the inscribed circles along the median camber line 62, the position *dₜ* of the maximum thickness *t,* and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows other geometric parameters of the blade. The blade has a total blade length *L.* As shown in Fig. 3, the root end is located at position *r* = 0, and the tip end located at *r = L.* The shoulder 40 of the blade is located at a position *r* = *L_{w}*, and has a shoulder width *W*, which equals the chord length at the shoulder 40. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as □*y*, which corresponds to the out of plane deflection from a pitch axis 22 of the blade.

Fig. 5 is a schematic perspective drawing of a preform mould 90 according to the present invention. The preform mould 90 comprises a support element 70 and nine strip members 88a-i arranged on the support element 70. Each of the strip members 88a-i has a top surface 89 extending between a first lateral edge 91 and an opposing second lateral edge 92. Together, the top surfaces of the respective strip members form a moulding surface 87 for moulding a preform for a rotor blade moulding process. The moulding surface 87 extends between a left edge 102, a right edge 104, a rear edge 106 and a front edge 108. Fig. 5 also illustrates the length L and width W of the top surface 89 of the strip member 88a.

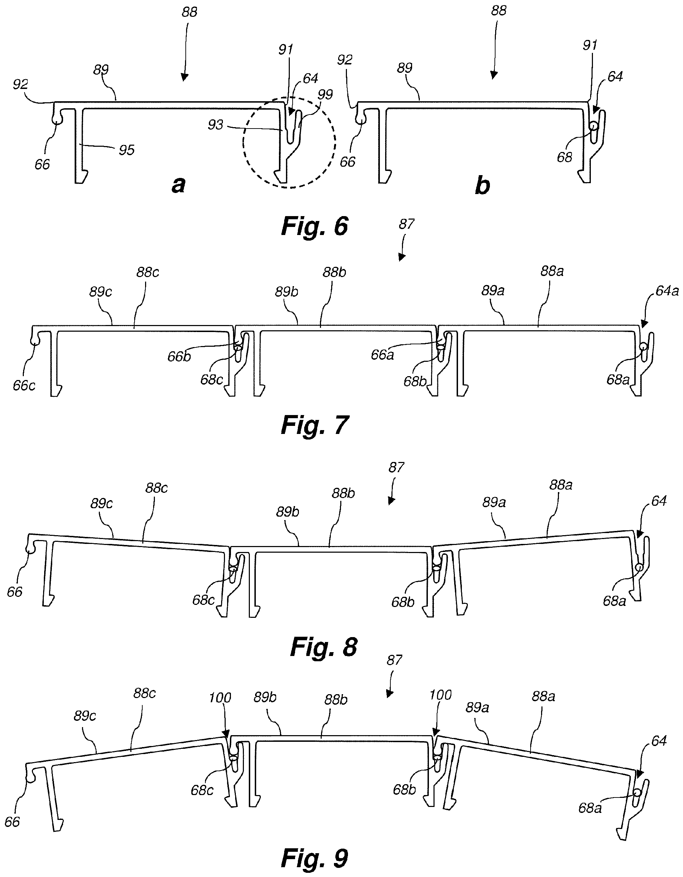

As best seen in Fig. 6, a groove 64 extends along the first lateral edge 91 substantially parallel to the same. The groove 64 is provided for receiving a tongue 66 of an adjacent strip member 88. The tongue 66 extends along the second lateral edge 92, substantially parallel to the same. In the embodiment shown in Fig. 6, the tongue 66 has an at least partially circular cross section. As seen in Fig. 6b, a sealing member 68 such as a silicone gasket may be arranged in the groove 64. The groove 64 is open towards the top of the strip member 88 and the tongue 66 is projecting downwards.

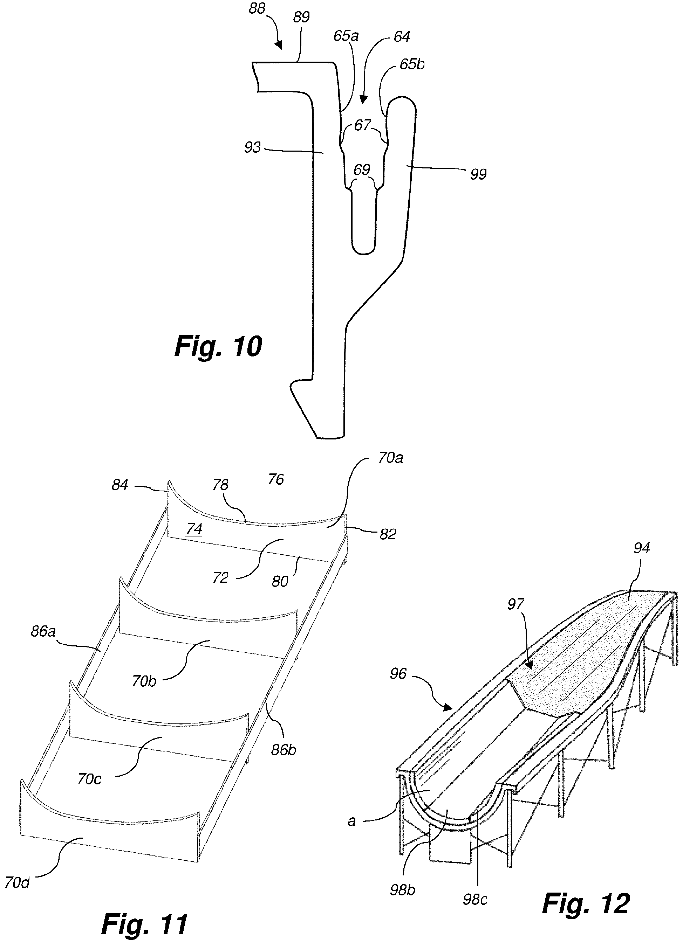

The strip member of Fig. 6 also comprises a first downward projecting leg 93 near the first lateral edge 91 and a second downward projecting leg 95 near the second lateral edge 92. The groove 64 is preferably formed between the downward projecting first leg 93 and an upward projecting arm 99 of the strip member 88, as best seen in Fig. 10. The upward projecting arm 99 may be elastically displaceable to receive the tongue 66 of an adjacent strip member 88 in the groove 64 in a locking arrangement.

Fig. 7 illustrates strip members 88a-c arranged in juxtaposition, wherein the tongue 66b of a strip member 88b is releasably fixed within the groove of an adjacent strip member 88c such that the tongue 66b abuts the sealing member 68c. Thus, the respective top surfaces 89a-c of the strip members 88a-c form a moulding surface 87 for moulding the preform.

While the moulding surface 87 illustrates in Fig. 7 is substantially flat, the strip members of the present invention also enable other configurations. As shown in Figs. 8 and 9, the moulding surface 87 may be arranged to form a substantially concave surface or a substantially convex surface, respectively. Fig. 9 also illustrates a cavity 100 that is formed between the lateral edges of adjacent strip members 88a-c. In some embodiments, this cavity 100 can be filled with a filler, such as a silicone filler, at least along part of the respective lateral edges (not shown). This may be useful if the mould is covered with a vacuum bag in order to consolidate the preform. In such cases a sealant tape or tacky tape may be used. Advantageously, such tape is in contact with the sealing member 68 for rendering the arrangement vacuum tight. The silicone or epoxy filler may be useful in the area in which the tape is added.

Fig. 10 is an enlarged side view of the part of a strip member encircled in Fig. The groove 64 comprises opposing inner side walls 65a,b, wherein a recess 67 is provided in each of the opposing inner side walls for receiving the tongue in a locking arrangement. In the embodiment shown in Fig. 10 the groove 64 also comprises opposing shoulders 69 for retaining the sealing member.

Fig. 11 is a perspective drawing of an arrangement of support elements which may be used for a preform mould according to the present invention. The arrangement of Fig. 11 comprises four support elements 70a-d, each support element comprising a planar member 72 having a front surface 74 and an opposing back surface 76, a curved top surface 78 and an opposing bottom surface 80, and two opposing lateral surfaces 82, 84 (shown for support element 70a). The top surface 78 of each support element is curved, corresponding to a cross sectional profile of a wind turbine blade half or a part thereof. In the embodiment shown in Fig. 11, the support elements 70a-d are arranged substantially parallel to each other and are interconnected by two lateral rails 86a, 86b. As illustrated in Fig. 12, the manufactured preforms 98a, 98b, 98c can be laid up in a blade mould 96 to form part of a wind turbine blade, such as the root laminate. It is particularly preferred that the preforms manufactured according to the present invention are used for a blade section starting from the root end of the blade, such as the root region. The preforms 98a, 98b, 98c are arranged in the blade mould cavity 97, usually together with additional fibre material 94. Then, resin is infused to the blade mould cavity 97, which is subsequently cured or hardened in order to form the blade part, such as a blade half.

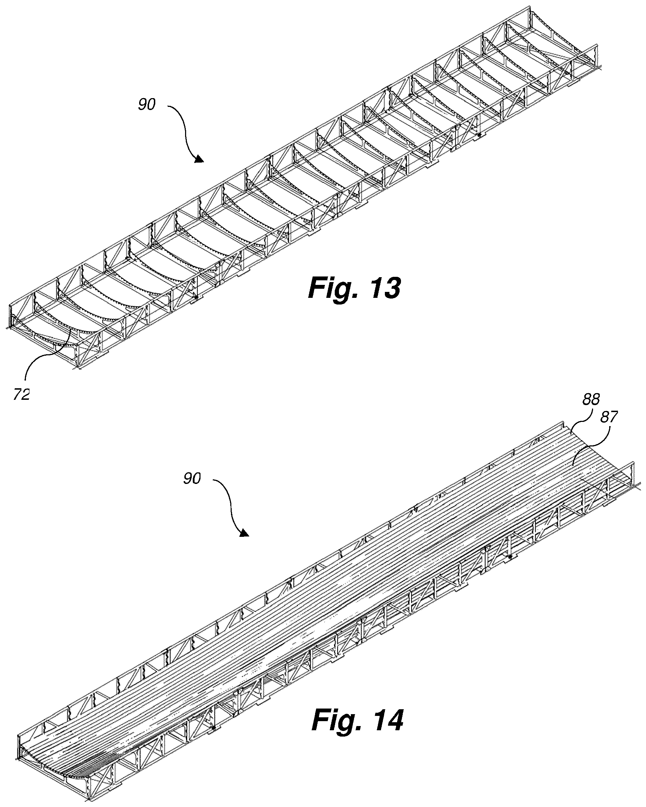

Figs. 13 and 14 illustrate another embodiment of the preform mould of the present invention, wherein Fig. 13 shows the preform mould without the strip members. The preform mould 90 comprises a support element with a plurality of planar members 72 and a plurality of strip members 88 arranged on the support element to form a moulding surface 87 for moulding a preform for a rotor blade moulding process.

The invention is not limited to the embodiments described herein, and may be modified or adapted without departing from the scope of the present invention, as defined by the appended claims.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 64: groove
- 65: inner sidewalls of groove
- 66: tongue
- 67: recess
- 68: sealing member
- 69: shoulder
- 70: support element
- 72: planar member
- 74: front surface
- 76: back surface
- 78: top surface of support element
- 80: bottom surface
- 82: lateral surface
- 84: lateral surface
- 86: rail
- 87: moulding surface of preform mould
- 88: strip member
- 89: top surface of strip member
- 90: preform mould
- 91: first lateral edge of top surface
- 92: second lateral edge of top surface
- 93: first leg
- 94: fibre material
- 95: second leg
- 96: blade mould
- 97: blade mould cavity
- 98: preform
- 99: arm
- 100: cavity
- 102: left edge of preform moulding surface
- 104: right edge of preform moulding surface
- 106: rear edge of preform moulding surface
- 108: front edge of preform moulding surface
- *c*: chord length
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- □*y*: prebend

## Claims

1. A preform mould (90) for manufacturing a preform for a wind turbine blade, the preform mould (90) comprising one or more support elements (70) and a plurality of strip members (88) arranged on the one or more support elements (70), wherein at least one of the strip members (88) comprises:
a top surface extending between a first lateral edge (91) and an opposing second lateral edge (92), **characterized in that** the at least one of the strip members (88) further comprises
a groove (64) extending along the first lateral edge (91), and
a tongue (66) extending along the second lateral edge (92),
wherein the strip members (88) are arranged in juxtaposition, and wherein the tongue (66) of a strip member (88) is releasably fixed within the groove (64) of an adjacent strip member (88), the respective top surfaces (89) of the strip members (88) forming a moulding surface (87) for moulding the preform.

2. A preform mould (90) according to claim 1, wherein the strip member further comprises a sealing member (68) arranged in the groove (64).

3. A preform mould (90) according to claim 2, wherein the tongue (66) of a strip member (88) is releasably fixed within the groove (64) of an adjacent strip member (88) such that the tongue (66) abuts the sealing member.

4. A preform mould (90) according to any of the preceding claims, wherein the tongue (66) has an at least partially circular cross section.

5. A preform mould (90) according to any of the preceding claims, wherein the groove (64) is upwardly open and the tongue (66) is projecting downwardly.

6. A preform mould (90) according to any of the preceding claims, wherein the groove (64) comprises opposing inner side walls, wherein a recess (67) is provided in each of the opposing inner side walls for receiving the tongue (66) in a locking arrangement.

7. A preform mould (90) according to any of claims 2-6, wherein the groove (64) comprises opposing shoulders for retaining the sealing member.

8. A preform mould (90) according to any of claims 2-7, wherein the sealing member is a gasket, preferably comprising a silicone material.

9. A preform mould (90) according to any of the preceding claims, wherein the moulding surface (87) is substantially gas-tight, and/or wherein a cavity between the lateral edges of adjacent strip members (88) is filled with a filler, such as a silicone filler, at least along part of the respective lateral edges.

10. A preform mould (90) according to any of the preceding claims, wherein the strip member (88) comprises a first downward projecting leg near the first lateral edge (91) and a second downward projecting leg near the second lateral edge (92).

11. A preform mould (90) according to any of the preceding claims, wherein the groove (64) is formed between a downward projecting first leg and an upward projecting arm of the strip member (88).

12. A preform mould (90) according to claim 11, wherein the upward projecting arm is elastically displaceable to receive the tongue (66) of an adjacent strip member (88) in the groove (64) in a locking arrangement.

13. A method of manufacturing a preform for a wind turbine blade using the preform mould (90) of any of claims 1-12, the method comprising the steps of
laying a fibre material, and optionally a binding agent, on at least part of the moulding surface (87), and
applying negative pressure to the fibre material and optionally binding agent for consolidating the preform.

14. A method of manufacturing a preform for a wind turbine blade according to claim 13, wherein the method further comprises the step of heating the fibre material and the binding agent to a temperature of between 40 and 200 °C, such as 100-130 °C, to form the preform.

15. A method of manufacturing a wind turbine blade part, the method comprising:
- manufacturing one or more preforms according to the method of claims 13 or 14,
- arranging the preforms in a blade mould cavity, optionally together with additional material,
- infusing resin to the blade mould cavity,
- curing or hardening the resin in order to form the blade part.

## Patentansprüche

1. Vorformling-Formwerkzeug (90) zum Herstellen eines Vorformlings für einen Windkraftanlagenflügel, wobei das Vorformling-Formwerkzeug (90) ein oder mehrere Tragelemente (70) und eine Vielzahl von auf dem einen oder den mehreren Tragelementen (70) angeordneten Leistenelementen (88) umfasst, wobei mindestens eines der Leistenelemente (88) Folgendes umfasst:
eine obere Oberfläche, die sich zwischen einer ersten Seitenkante (91) und einer gegenüberliegenden zweiten Seitenkante (92) erstreckt, **dadurch gekennzeichnet, dass** das mindestens eine der Leistenelemente (88) ferner Folgendes umfasst:
eine Nut (64), die sich entlang der ersten Seitenkante (91) erstreckt, und
eine Feder (66), die sich entlang der zweiten Seitenkante (92) erstreckt,
wobei die Leistenelemente (88) nebeneinander angeordnet sind, und wobei die Feder (66) eines Leistenelements (88) lösbar in der Nut (64) eines benachbarten Leistenelements (88) fixiert ist, wobei die jeweiligen oberen Oberflächen (89) der Leistenelemente (88) eine Formungsfläche (87) zum Formen des Vorformlings bilden.

2. Vorformling-Formwerkzeug (90) nach Anspruch 1, wobei das Leistenelement ferner ein in der Nut (64) angeordnetes Dichtungselement (68) umfasst.

3. Vorformling-Formwerkzeug (90) nach Anspruch 2, wobei die Feder (66) eines Leistenelements (88) derart lösbar in der Nut (64) eines benachbarten Leistenelements (88) fixiert ist, dass die Feder (66) an dem Dichtungselement anliegt.

4. Vorformling-Formwerkzeug (90) nach einem der vorangehenden Ansprüche, wobei die Feder (66) einen mindestens teilweise kreisförmigen Querschnitt aufweist.

5. Vorformling-Formwerkzeug (90) nach einem der vorangehenden Ansprüche, wobei die Nut (64) nach oben offen ist und die Feder (66) nach unten ragt.

6. Vorformling-Formwerkzeug (90) nach einem der vorangehenden Ansprüche, wobei die Nut (64) gegenüberliegende innere Seitenwände umfasst, wobei in jeder der gegenüberliegenden inneren Seitenwände eine Vertiefung (67) bereitgestellt ist, um die Feder (66) in einer arretierenden Anordnung aufzunehmen.

7. Vorformling-Formwerkzeug (90) nach einem der Ansprüche 2-6, wobei die Nut (64) gegenüberliegende Absätze zum Halten des Dichtungselements umfasst.

8. Vorformling-Formwerkzeug (90) nach einem der Ansprüche 2-7, wobei es sich bei dem Dichtungselement um eine Formdichtung handelt, die vorzugsweise ein Silikonmaterial umfasst.

9. Vorformling-Formwerkzeug (90) nach einem der vorangehenden Ansprüche, wobei die Formungsfläche (87) im Wesentlichen gasdicht ist und/oder wobei eine Höhlung zwischen den Seitenkanten benachbarter Leistenelemente (88) mindestens entlang eines Teils der jeweiligen Seitenkanten mit einem Füllstoff, wie etwa einem Silikonfüllstoff, gefüllt ist.

10. Vorformling-Formwerkzeug (90) nach einem der vorangehenden Ansprüche, wobei das Leistenelement (88) einen ersten nach unten ragenden Schenkel in der Nähe der ersten Seitenkante (91) und einen zweiten nach unten ragenden Schenkel in der Nähe der zweiten Seitenkante (92) umfasst.

11. Vorformling-Formwerkzeug (90) nach einem der vorangehenden Ansprüche, wobei die Nut (64) zwischen einem nach unten ragenden ersten Schenkel und einem nach oben ragenden Arm des Leistenelements (88) gebildet ist.

12. Vorformling-Formwerkzeug (90) nach Anspruch 11, wobei der nach oben ragende Arm elastisch verschiebbar ist, um die Feder (66) eines benachbarten Leistenelements (88) in einer arretierenden Anordnung in der Nut (64) aufzunehmen.

13. Verfahren zum Herstellen eines Vorformlings für einen Windkraftanlagenflügel unter Verwendung des Vorformling-Formwerkzeugs (90) nach einem der Ansprüche 1-12, wobei das Verfahren folgende Schritte umfasst:
Legen eines Fasermaterials und optional eines Bindemittels auf mindestens einen Teil der Formungsfläche (87), und
Anlegen von Unterdruck auf das Fasermaterial und optional Bindemittel zum Verfestigen des Vorformlings.

14. Verfahren zum Herstellen eines Vorformlings für einen Windkraftanlagenflügel nach Anspruch 13, wobei das Verfahren ferner den Schritt des Erwärmens des Fasermaterials und des Bindemittels auf eine Temperatur von zwischen 40 und 200 °C, wie etwa 100-130 °C, umfasst, um den Vorformling zu bilden.

15. Verfahren zum Herstellen eines Windkraftanlagenflügelteils, wobei das Verfahren Folgendes umfasst:
- Herstellen von einem oder mehreren Vorformlingen nach dem Verfahren von Anspruch 13 oder 14,
- Anordnen der Vorformlinge in einer Flügelformwerkzeughöhlung, optional zusammen mit zusätzlichem Material,
- Eingießen von Harz in die Flügelformwerkzeughöhlung,
- Abbinden oder Härten des Harzes, um den Flügelteil zu bilden.

## Revendications

1. Moule de préforme (90) servant à fabriquer une préforme pour une pale d'éolienne, le moule de préforme (90) comportant un ou plusieurs éléments de support (70) et une pluralité d'éléments formant bande (88) agencés sur lesdits un ou plusieurs éléments de support (70), dans lequel au moins l'un des éléments formant bande (88) comporte :
une surface supérieure s'étendant entre un premier bord latéral (91) et un deuxième bord latéral opposé (92), **caractérisé en ce que** ledit au moins l'un des éléments formant bande (88) comporte par ailleurs
une rainure (64) s'étendant le long du premier bord latéral (91), et
une languette (66) s'étendant le long du deuxième bord latéral (92),
dans lequel les éléments formant bande (88) sont agencés de manière juxtaposée, et dans lequel la languette (66) d'un élément formant bande (88) est fixée de manière libérable à l'intérieur de la rainure (64) d'un élément adjacent formant bande (88), les surfaces supérieures (89) respectives des éléments formant bande (88) formant une surface de moulage (87) pour mouler la préforme.

2. Moule de préforme (90) selon la revendication 1, dans lequel l'élément formant bande comporte par ailleurs un élément d'étanchéité (68) agencé dans la rainure (64).

3. Moule de préforme (90) selon la revendication 2, dans lequel la languette (66) d'un élément formant bande (88) est fixée de manière libérable à l'intérieur de la rainure (64) d'un élément adjacent formant bande (88) de telle sorte que la languette (66) vient prendre appui contre l'élément d'étanchéité.

4. Moule de préforme (90) selon l'une quelconque des revendications précédentes, dans lequel la languette (66) a une coupe transversale au moins partiellement circulaire.

5. Moule de préforme (90) selon l'une quelconque des revendications précédentes, dans lequel la rainure (64) est ouverte vers le haut et la languette (66) fait saillie vers le bas.

6. Moule de préforme (90) selon l'une quelconque des revendications précédentes, dans lequel la rainure (64) comporte des parois latérales intérieures opposées, dans lequel un évidement (67) est mis en oeuvre dans chacune des parois latérales intérieures opposées à des fins de réception de la languette (66) selon un agencement de verrouillage.

7. Moule de préforme (90) selon l'une quelconque des revendications 2 à 6, dans lequel la rainure (64) comporte des épaulements opposés à des fins de retenue de l'élément d'étanchéité.

8. Moule de préforme (90) selon l'une quelconque des revendications 2 à 7, dans lequel l'élément d'étanchéité est un joint d'étanchéité, comportant de préférence un matériau à base de silicone.

9. Moule de préforme (90) selon l'une quelconque des revendications précédentes, dans lequel la surface de moulage (87) est sensiblement étanche au gaz, et/ou dans lequel une cavité entre les bords latéraux d'éléments adjacents formant bande (88) est remplie d'une charge, telle qu'une charge de silicone, au moins le long d'une partie des bords latéraux respectifs.

10. Moule de préforme (90) selon l'une quelconque des revendications précédentes, dans lequel l'élément formant bande (88) comporte une première patte faisant saillie vers le bas près du premier bord latéral (91) et une deuxième patte faisant saillie vers le bas près du deuxième bord latéral (92).

11. Moule de préforme (90) selon l'une quelconque des revendications précédentes, dans lequel la rainure (64) est formée entre une première patte faisant saillie vers le bas et un bras faisant saillie vers le haut de l'élément formant bande (88).

12. Moule de préforme (90) selon la revendication 11, dans lequel le bras faisant saillie vers le haut est en mesure de se déplacer de manière élastique à des fins de réception de la languette (66) d'un élément adjacent formant bande (88) dans la rainure (64) selon un agencement de verrouillage.

13. Procédé de fabrication d'une préforme pour une pale d'éolienne en utilisant le moule de préforme (90) selon l'une quelconque des revendications 1 à 12, le procédé comportant les étapes consistant à
poser une matière fibreuse, et éventuellement un liant, sur au moins une partie de la surface de moulage (87), et
appliquer une pression négative sur la matière fibreuse et éventuellement sur le liant à des fins de consolidation de la préforme.

14. Procédé de fabrication d'une préforme pour une pale d'éolienne selon la revendication 13, dans lequel le procédé comporte par ailleurs l'étape consistant à chauffer la matière fibreuse et le liant jusqu'à une température entre 40 et 200 °C, telle que 100-130 °C, pour former la préforme.

15. Procédé de fabrication d'une partie formant pale d'éolienne, le procédé comportant les étapes consistant à :
- fabriquer une ou plusieurs préformes selon le procédé selon la revendication 13 ou la revendication 14
- agencer les préformes dans une cavité de moule de pale, éventuellement ensemble avec de la matière supplémentaire,
- faire infuser de la résine au niveau de la cavité de moule de pale,
- faire sécher ou durcir la résine afin de former la partie formant pale.
